**Europäisches Patentamt**

**European Patent Office**

**Office européen des brevets**

(19)

(11) Veröffentlichungsnummer: **0 138 918**
**B1**

(12)

# EUROPÄISCHE PATENTSCHRIFT

(45) Veröffentlichungstag der Patentschrift:
24.08.88

(51) Int. Cl.⁴: **F 24 H 9/02,** F 16 B 41/00

(21) Anmeldenummer: 84901321.4

(22) Anmeldetag: 14.03.84

(86) Internationale Anmeldenummer:
PCT/DE 84/00056

(87) Internationale Veröffentlichungsnummer:
WO 84/03757 (27.09.84 Gazette 84/23)

(54) VORRICHTUNG ZUR BEFESTIGUNG EINES GEHÄUSEOBERTEILS.

(30) Priorität: 18.03.83 DE 8308542 U

(43) Veröffentlichungstag der Anmeldung:
02.05.85 Patentblatt 85/18

(45) Bekanntmachung des Hinweises auf die Patenterteilung:
24.08.88 Patentblatt 88/34

(84) Benannte Vertragsstaaten:
AT BE CH DE FR GB LI LU NL SE

(56) Entgegenhaltungen:
DE - A - 2 508 458
GB - A - 1 250 273
US - A - 3 295 874

(73) Patentinhaber: Joh. Vaillant GmbH u. Co., Berghauser Strasse 40 Postfach 10 10 20, D-5630 Remscheid 1 (DE)

(72) Erfinder: FELDMANN, Ernst, Papenberger Str. 8, D-5630 Remscheid 1 (DE)

(74) Vertreter: Heim, Johann-Ludwig, c/o Joh. Vaillant GmbH u. Co Postfach 10 10 20 Berghauser Strasse 40, D-5630 Remscheid 1 (DE)

**Beschreibung**

Die vorliegende Erfindung bezieht sich auf eine Vorrichtung zum Befestigen eines Gehäuseabdeckteils an einem Basisteil gemäss dem Oberbegriff des unabhängigen Anspruchs.

Brennstoffbeheizte Wärmequellen, insbesondere gasbeheizte Durchlauf-Wasserheizer, werden häufig als sogenannte kaminlose Geräte ausgeführt und besitzen somit eine geschlossene Verbrennungskammer, die lediglich über eine Frischluftzufuhr- und eine Abgasabfuhrleitung mit der Atmosphäre in Verbindung stehen. Hierbei ist es notwendig, dass das Gehäuse der Verbrennungskammer, das äusserlich nicht dekorativ gestaltet ist, sondern lediglich den Zweckfunktionen entsprechend aufgebaut ist, mit einem Zierdeckel abgedeckt wird. Das Problem liegt nun in der Befestigung des Zierdeckels, da dieser möglichst nicht in seinem mittleren Bereich in seinem Aussehen durch Befestigungselemente beziehungsweise deren Durchtrittslöcher beeinträchtigt werden soll.

Aus der DE-A-2 508 458 ist eine Befestigungsvorrichtung für den Mantel eines gas- oder ölbeheizten Wassererhitzers bekanntgeworden, bei der ein Tragrahmen mit Tragarmen vorgesehen ist, wobei diese Tragarme als Gleitschienen für Führungslaschen ausgebildet sind, welche an den Seitenwänden des Gehäuseabdeckmantels nach innen ragend angebracht und bei der Montage des Gerätemantels zum höhenrichtigen Heranführen des Abdeckteils an den tragbaren Rahmen auf die zugeordnete Gleitschiene aufsetzbar sind. Es sind Haken vorgesehen, die nach vorübergehender federnder Auslenkung hinter Wangen einschnappen und danach die Abdeckung mit ausreichender Kraft an den Tragrahmen andrücken.

Weiterhin ist es aus der DE-C-1 289 976 bekannt, die Vorderschale eines gasbeheizten Wassererhitzers mit der Rückwand zu verbinden, indem am oberen Dichtrand der Vorderschale ein Blechstreifen befestigt ist, welcher im Querschnitt spannhakenförmig ausgebildet ist und den oberen Dichtrand der Rückwand derart hintergreift, dass beim Einschwenken der Vorderschale die Dichtungseinlage zusammengedrückt wird. Rückwand und Vorderschale werden im übrigen mittels einer Befestigungsschraube gasdicht verbunden, welche durch die Vorderschale hindurchgesteckt ist und in einen der Armatur zugeordneten Haltewinkel eingeschraubt ist. Bei dieser Ausführungsform lässt es sich nicht vermeiden, dass die Schraube im zentralen Bereich der Vorderseite des Abdeckteils angeordnet ist. Die Schraube ist ausserdem verlierbar.

Der vorliegenden Erfindung liegt mithin die Aufgabe zugrunde, ausgehend von einer Vorrichtung der eingangs näher bezeichneten Art, eine Befestigungsmöglichkeit für das Gehäuseabdeckteil, also den Mantel, am Basisteil, also der Verbrennungskammer, anzugeben, die ohne weiteres zu Servicezwecken wieder gelöst werden kann und die den zentralen Bereich des Abdeckteils unbeeinträchtigt von Befestigungselementen und deren Ausnehmungen hält.

Die Lösung dieser Aufgabe besteht in den kennzeichnenden Merkmalen des Hauptanspruchs.

Weitere Ausgestaltungen und besonders vorteilhafte Weiterbildungen der Erfindung sind Gegenstand der Unteransprüche beziehungsweise gehen aus der nachfolgenden Beschreibung hervor, die anhand der Figuren eins und zwei der Zeichnung ein Ausführungsbeispiel der Erfindung näher erläutern.

Es zeigen:

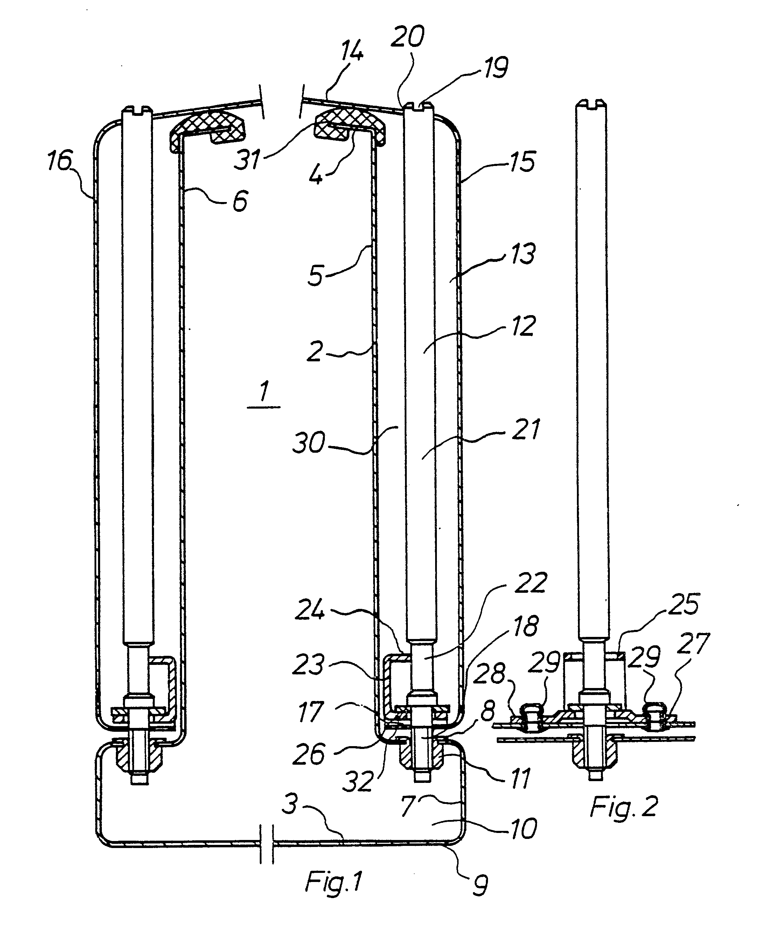

Fig. 1 einen Querschnitt durch eine brennstoffbeheizte Wärmequelle und

Fig. 2 eine Seitenansicht.

In beiden Figuren bedeuten gleiche Bezugszeichen jeweils die gleichen Einzelheiten.

Die brennstoffbeheizte Wärmequelle 1, beispielsweise ein sogenannter kaminloser Durchlauf-Wasserheizer, weist ein, ein Basisteil 2 umfassendes Gehäuse auf, das eine bis auf eine Frischluftzufuhr- und eine Abgasabfuhrleitung geschlossene Verbrennungskammer umgibt. Das Basisteil besitzt eine an der Wand des Aufstellungsraums der Wärmequelle 1 anliegende Rückwand 3 und eine Vorderseite 4 sowie Seitenwände 5 und 6. Das Basisteil 2 besitzt etwa die Form eines Quaders. Im Bereich der Rückseite 3 ist ein Flansch 7 vorgesehen, der nahezu um den Umfang herumläuft, mindestens aber im Bereich der Seitenwände 5 und 6 vorhanden ist. Dieser Flansch 7 besitzt eine Oberseite 8 und eine Unterseite 9. Er wird durch ein entsprechend gezogenes Blechteil gebildet. Vom Flansch wird eine Kammer 10 dreiseitig abgegrenzt. Im Bereich der Kammer 10 ist an der Unterseite der Oberseite 8 eine Mutter 11 angenietet. Im Bereich des Gewindelochs der Mutter 11 befindet sich ein entsprechendes Loch in der Oberseite 8.

Diese Mutter 11 ist ein Befestigungselement für eine Langschaftschraube 12, mit der ein einen Mantel 13 darstellendes Abdeckteil am Basisteil 2 befestigt werden soll.

Das Abdeckteil 13 umschliesst einen Raum, der etwas grösser gehalten ist als der Raum, der vom Basisteil 2 eingenommen wird. Die Breite des Abdeckteils 13 entspricht der Basisteilbreite, gemessen am Flansch 7. Das Abdeckteil 13 besteht aus gezogenem und emailliertem Stahlblech. Das Abdeckteil weist eine Frontseite 14 und Seitenwände 15 und 16 auf. Es besitzt einen etwa U-förmigen Querschnitt. Im Bereich der Seitenwände ist eine Einziehung 17 angeordnet, so dass ein in den Innenraum des Abdeckteils gerichteter Gegenflansch gebildet wird. Die Einziehung ist so bemessen, dass sie mit ihrer Aussenseite auf die Oberseite 8 des Flansches 7 zu liegen kommen kann, und ist mit einer Ausnehmung versehen, durch die das mit einem Gewinde 18 versehene Ende der Langschaftschraube hindurchgreift. Die Langschaftschraube weist an ihrem dem Gewinde 18 abgewandten Ende eine als Handhabe dienende Schlitzung 19 auf, die durch eine Ausnehmung 20 am Rand der Frontseite 14 des Abdeckteils 13 hindurchgreift. Zwischen dem Schaftteil 21 und dem Gewinde 18 ist ein Bereich 22 eines reduzierten Durchmessers an der Schraube vorgesehen, in dem ein U-förmiger Bügel 23 mit einer an einem Schenkel 24 vorgesehenen Gabel 25 eingreift. Der Bügel 23 weist einen zweiten Schenkel 26 auf, woran eine Scheibe 32 angelehnt ist, die beide ein Loch besitzen, durch den der Gewindeschaft 18 so greift, dass das Gabelende des Schenkels 24 in den Bereich des reduzierten Durchmessers 22 eingreift. Somit ist der Bügel unverlierbar mit der Langschaftschraube 12 verbunden. Der Bügel weist zwei Vorsprünge 27 und 28 auf, die sich an die Innenseite der Einziehung 17 anlegen und mit der Einziehung über Nieten 29 verbunden sind.

Die Abnahme des Abdeckteils 13 vom Basisteil 2 der Wärmequelle 1 geschieht wie folgt:

Durch Betätigen der Handhabe 19 der Langschaftschraube 12 wird diese aus dem Bereich der Mutter 11 mit ihrem Gewindeschaft 18 herausgedreht. Bei diesem Herausdrehen legt sich der mit der Gabel versehene Schenkel 23 an das untere Ende des Bereichs 22 des reduzierten Durchmessers der Langschaftschraube 12 an.

Nunmehr kann das Abdeckteil 13 mitsamt der Schraube und dem Bügel 23 abgenommen werden. Die Langschaftschraube 12 verbleibt unverlierbar im Innenraum 30 des Abdeckteils 13. Zur Montage des Abdeckteils ist dieser lediglich wieder auf die Oberseite 8 des Flansches 7 aufzusetzen und die Schraube 12 wieder in die Mutter 11 einzudrehen. Der Vorteil dieser Befestigung liegt darin, dass sie unmittelbar von der Frontseite 14 des Abdeckteils zugänglich ist, dass aber die Ausnehmungen 20 zum Bedienen der Schlitze 19 der Langschaftschrauben 12, von denen je eine an der Seitenwand 5 beziehungsweise 6 vorgesehen ist, nicht in einem mittleren Bereich der Vorderseite 14, sondern im Randbereich angeordnet sind, wo sie wenig stören. Der weitere Vorteil liegt in der Unverlierbarkeit sämtlicher Befestigungselemente und in der leichten Zugänglichkeit des Bedienteils der Schraube 12 von der Vorderseite.

**Patentansprüche**

1. Vorrichtung zum Befestigen eines Gehäuseabdeckteils (13) an einem Basisteil (2), die beide einen im wesentlichen U-förmigen Querschnitt aufweisen, wobei das Basisteil (2) einen an seinem Boden (3) angeordneten teilweise umlaufenden Flansch (7) aufweist, auf dem das mit einer gleichfalls nahezu umlaufenden Einziehung (17) versehene Abdeckteil (13) aufsitzt, dadurch gekennzeichnet, dass die Schenkel beider U-förmigen Teile sich im wesentlichen parallel zueinander erstrecken und dass am Flansch (7) eine Mutter (11) befestigt ist, die eine an der Einziehung (17) gelagerte Schraube (12) aufnimmt, die mit ihrem Schaft im Raum zwischen den Schenkeln des Basisteils (2) und des Abdeckteils (13) verläuft und durch das Abdeckteil (13) an deren Rand im Rahmen einer Ausnehmung (20) austritt und dort mit einer Handhabe (19) versehen ist.

2. Vorrichtung nach Anspruch 1, dadurch gekennzeichnet, dass die Schraube von einem U-artig ausgeführten Bügel (23) im Bereich (22) eines reduzierten Durchmessers mit dessen einem Schenkel (24) gehalten ist.

3. Vorrichtung nach Anspruch 1 oder 2, dadurch gekennzeichnet, dass der Bügel (23) in seinem einen Schenkel (26) ein Loch und in seinem anderen Schenkel (24) einen Schlitz aufweist, mit dem der Bereich (22) des reduzierten Durchmessers der Schraube (12) gehalten ist und dass dieser Bügel an der Einziehung (17) des Oberteils (13) befestigt ist.

**Claims**

1. Apparatus for securing a housing cover (13) to a base (2), both of which are substantially U-shaped in cross-section, wherein the base (2) is provided at its bottom (3) with a flange (7) that extends around a part of the periphery and on which the cover (13) is seated, which is provided with an inturned portion (17), which also extends almost around the entire periphery, characterized in that the legs of the two U-shaped members are substantially parallel to each other and a nut (11) is secured to the flange (7) and accommodates a screw (12), which is movably mounted on the inturned portion and has a shank that extends in the space between the legs of the base (2) and of the cover (13) and extends out through the cover (13) at the edge thereof in an aperture (20) and is provided there with a handle (19).

2. Apparatus according to claim 1, characterized in that the screw is held at a portion which is smaller in diameter by one leg (24) of a U-shaped bent member (23).

3. Apparatus according to claim 1 or 2, characterized in that the U-shaped bent member (23) has in one leg (26) a hole and in its other leg (24) has a slot, by which the screw (12) is held at its portion (22) which is smaller in diameter, and that that U-shaped bent member is secured to the inturned portion (17) of the cover (13).

**Revendications**

1. Dispositif pour la fixation d'un habillage (13) sur un élément de base (2), qui tous deux présentent une section essentiellement en forme d'un U, l'élément de base (2) portant à son fond (3) un flasque (7) qui s'étend sur presque tout le pourtour, et sur lequel est posé l'habillage (13) muni d'un rebord (17) s'étendant également sur presque tout le pourtour, caractérisé par le fait que les ailettes des deux éléments sont essentiellement parallèles les unes par rapport aux autres, et que le flasque (7) porte un écrou (11) où se visse un goujon (12) maintenu par le rebord (17) et qui s'étend entre les ailettes de l'élément de base (2) et celles de l'habillage (13) et perce ledit habillage dans une zone marginale moyennant un trou (20) en dehors duquel il est muni d'un moyen (19) pour son serrage et son desserrage.

2. Dispositif suivant la revendication 1, caractérisé par le fait que le goujon (12) est maintenu à sa partie (22) à diamètre réduit par une ailette (24) d'un étrier (23) en forme d'un U.

3. Dispositif suivant la revendication 1 ou 2, caractérisé par le fait qu'une ailette (26) de l'étrier (23) est munie d'un trou, et l'autre ailette (24), d'une fente, qui maintient la partie (22) à diamètre réduit du goujon (12), et que cet étrier est fixé au bord (17) de l'habillage (13).

Fig.1

Fig. 2